# EUROPEAN PATENT APPLICATION

(11) **EP 4 782 909 A1**
(43) Date of publication of application: **29.07.2026**
(21) Application number: 24866965.7
(22) Date of filing: 22.06.2024
(51) Int. Cl.: G02F 1/025

(54) **OPTICAL MODULATOR**

(30) Priority: 18.09.2023 CN 202322533198 U
(71) Applicant: Innolight Technology (Suzhou) Ltd., Suzhou, Jiangsu 215000 (CN)
(72) Inventor: YAN, Dongdong, Suzhou, Jiangsu 215000 (CN); LI, Xianyao, Suzhou, Jiangsu 215000 (CN)
(74) Representative: Becker, Eberhard
(86) International application number: PCT/CN2024/100812
(87) International publication number: WO 2025/060546

(57) **Abstract**

An optical modulator, comprising: a first dielectric layer (10); a second dielectric layer (20) located on the first dielectric layer (10), a waveguide structure (210) being provided in the second dielectric layer (20); an insulating layer (30) located on the second dielectric layer (20); and a signal transmission structure (40) comprising a first conductive structure (410) and a second conductive structure (420), wherein the first conductive structure (410) is located on the insulating layer (30), the second conductive structure (420) is located in the second dielectric layer (20), and the second conductive structure (420) is electrically connected to the waveguide structure (210) and the first conductive structure (410) by means of via holes (50); wherein at least one of the first conductive structure (410) and the second conductive structure (420) has a target conductive structure, the target conductive structure is a periodic structure, and a path distance of an electrical signal transmitted in the extension direction of the target conductive structure is greater than a path distance of an optical signal transmitted in the extension direction of the waveguide structure (210).

## Description

This disclosure claims priority to the Chinese Patent Application titled "OPTICAL MODULATOR," Application Number: 202322533198.7, filed on September 18, 2023, the entire contents of which are incorporated herein by reference.

### Technical Field

The present disclosure relates to the field of optical communication technology, and in particular relates to an optical modulator.

### Description of Related Art

In silicon-based integrated optoelectronic systems, traveling wave electrode modulators based on the Silicon-On-Insulator (SOI) process are generally composed of optical waveguide loads and traveling wave electrodes. Electromagnetic waves are transmitted between the traveling wave electrodes, while optical carriers are transmitted within loaded optical waveguides. During the transmission of optical carriers and electromagnetic waves, the interaction between the electromagnetic wave and the optical carrier leads to a change in the phase of the optical carrier, thereby accomplishing the modulation from electrical signals to optical signals.

In the relevant technologies, silicon-based traveling wave electrode modulators are primarily fabricated using the SOI process based on CMOS (Complementary Metal-Oxide-Semiconductor) technology, characterized by low cost and ease of large-scale production. However, this structure presents a mismatch in the group refractive indices of electromagnetic waves and optical waves. This discrepancy may lead to electro-optical mismatch within the modulator, thereby deteriorating the modulation performance of the modulator.

### CONTENT OF THE UTILITY MODEL PATENT

Based on this, it is necessary to provide an optical modulator in view of the above technical problems, which improves a matching degree of a velocity of transmitting electro-optical signals in the optical modulator, thereby improving a performance of the optical modulator in modulating optical signals.

In order to achieve the above purpose, the present disclosure provides an optical modulator, the optical modulator includes:
A first dielectric layer;
A second dielectric layer, located on the first dielectric layer, wherein a waveguide structure is disposed in the second dielectric layer;
An insulating layer, located on the second dielectric layer;
A signal transmission structure, including a first conductive structure and a second conductive structure, wherein, the first conductive structure is located on the insulating layer, the second conductive structure is located in the second dielectric layer, the second conductive structure is electrically connected to the waveguide structure and the first conductive structure respectively through via holes; wherein,
At least one of the first conductive structure and the second conductive structure has a target conductive structure, the target conductive structure is a periodic structure, and a path distance of an electrical signal transmitting in an extension direction of the target conductive structure is greater than a path distance of an optical signal transmitting in an extension direction of the waveguide structure.

In one of the embodiments, the signal transmission structure includes a plurality of the first conductive structures, wherein one of the first conductive structures is adjacent to the insulating layer, and is electrically connected to the second conductive structure through a via hole penetrating the insulating layer, and each of the first conductive structures is stacked along a direction from the first dielectric layer pointing to the insulating layer.

In one of the embodiments, the signal transmission structure includes a plurality of the second conductive structures, wherein one end of one of the second conductive structures is electrically connected to the first conductive structure through a via hole, and the other end is electrically connected to the waveguide structure through a via hole, and each of the first conductive structures is stacked along a direction from the insulating layer pointing to the first dielectric layer.

In one of the embodiments, the signal transmission structure includes a plurality of the first conductive structures and a plurality of the second conductive structures, and a total number of the first conductive structures and the second conductive structures ranges from 6 to 8 layers.

In one of the embodiments, the optical modulator further includes a third dielectric layer, the third dielectric layer is located on the insulating layer, and the second conductive structure is disposed in the third dielectric layer.

In one of the embodiments, the insulating layer and the third dielectric layer are fabricated from the same material.

In one of the embodiments, the first dielectric layer is a silicon layer or a glass material layer.

In one of the embodiments, the first dielectric layer is formed on the second dielectric layer through bonding.

In one of the embodiments, the first conductive structure includes two first sub-conductive structures, the two first sub-conductive structures have the target conductive structure, and the two first sub-conductive structures are disposed facing each other or back to back.

In one of the embodiments, the second conductive structure includes two second sub-conductive structures, each of the second sub-conductive structures has the target conductive structure, and the two second sub-conductive structures are disposed facing each other or back to back.

In one of the embodiments, the target conductive structure includes a main conductive structure and a plurality of side conductive structures periodically arranged along the extension direction of the waveguide structure, wherein, each of the side conductive structures is electrically connected to the main conductive structure.

The above optical modulator includes the signal transmission structure and the first dielectric layer, the second dielectric layer and the insulating layer stacked in sequence. The second dielectric layer is provided with the waveguide structure. The signal transmission structure includes the first conductive structure and the second conductive structure. The first conductive structure is located on the insulating layer. The second conductive structure is located in the second dielectric layer, and the second conductive structure is electrically connected to the waveguide structure and the first conductive structure respectively through via holes. Since at least one of the first conductive structure and the second conductive structure has the target conductive structure with the periodic structure, and the path distance of the electrical signal transmitted along the extension direction of the target conductive structure is greater than the path distance of the optical signal transmitted along the extension direction of the waveguide structure, compared with the transmission path of the optical signal, the target conductive structure extends the transmission path of the electrical signal, which serves the function of slowing down the transmission velocity of the electrical signal, enabling the velocity of the optical modulator transmitting the electrical signal to be consistent with the velocity of transmitting the optical signal, improving the velocity matching degree of the optical modulator transmitting the electro-optical signal, thereby improving the modulation performance of the optical modulator for the optical signal. In addition, the waveguide structure, the first conductive structure and the second conductive structure in the optical modulator of the present disclosure constitute a novel "sandwich" structure, and the first dielectric layer is provided to replace the substrate layer based on the CMOS-SOI process in the related technology. The first dielectric layer does not form parasitic capacitance with the waveguide structure. Compared with the old-type optical modulator (substrate layer, waveguide structure layer and oxide layer) in which parasitic capacitance exists between the substrate layer and the waveguide structure, the optical modulator provided by the present disclosure improves the electro-optical bandwidth of the optical modulator, thereby improving the modulation performance of the optical modulator for the optical signal.

### BRIEF DESCRIPTION OF THE DRAWINGS

FIG. 1 is a schematic structural diagram of an optical modulator taken along an XY section provided by an embodiment;
FIG. 2 is a schematic structural diagram of an optical modulator taken along an XY section provided by an embodiment;
FIG. 3 to FIG. 10 are schematic structural diagrams of a conductive structure taken along an XZ section provided by an embodiment;
FIG. 11 is a schematic structural diagram of a first conductive structure taken along an XZ section provided by an embodiment;
FIG. 12 is a schematic diagram of a three-dimensional structure of a modulator provided by an embodiment.

### Description of Reference Numerals

10-first dielectric layer, 20-second dielectric layer, 210-waveguide structure, 211-optical waveguide, 212-slab structure, 213-contact structure, 30-insulating layer, 40-signal transmission structure, 410-first conductive structure, 411-first sub-conductive structure, 420-second conductive structure, 421-second sub-conductive structure, 50-via hole, 60-third dielectric layer, 710-main conductive structure, 720-side conductive structure.

### DESCRIPTION OF THE EMBODIMENTS

For ease of understanding the present disclosure, the present disclosure will be described more fully hereinafter with reference to the related accompanying drawings. Preferred embodiments of the present disclosure are shown in the accompanying drawings. However, the present disclosure may be implemented in many different forms and is not limited to the embodiments described herein. On the contrary, the purpose of providing these embodiments is to make the disclosure of the present disclosure more thorough and comprehensive.

Unless otherwise defined, all technical and scientific terms used herein have the same meaning as commonly understood by those skilled in the technical field of the present disclosure. The terms used herein in the specification of the present disclosure are only for the purpose of describing specific embodiments and are not intended to limit the present disclosure. The term "and/or" used herein includes any and all combinations of one or more related listed items.

In the description of the present disclosure, it should be understood that the orientation or positional relationships indicated by the terms "upper", "lower", "vertical", "horizontal", "inner", "outer", etc. are based on the method or positional relationships shown in the accompanying drawings, and are only for the convenience of describing the present disclosure and simplifying the description, rather than indicating or implying that the referred device or element must have a specific orientation, be constructed and operated in a specific orientation, and therefore should not be understood as a limitation to the present disclosure.

As stated in the background technology, the traveling wave electrode electro-optical modulator in the related technology has the situation where the group refractive indices of electromagnetic waves and optical waves are inconsistent. Generally, since light propagates in a silicon waveguide and the refractive index of the silicon waveguide is relatively large, this results in a slower velocity of optical waves and a relatively high group refractive index. However, since the dielectric constant of the medium surrounding the electromagnetic wave is relatively low, the propagation of electromagnetic waves is relatively fast and the group refractive index is relatively low. This results in the modulator transmitting optical waves at a slower velocity than transmitting electromagnetic waves, thereby causing the problem of electro-optical mismatch, which deteriorates the modulation performance of the modulator for optical signals. In view of this, the present disclosure provides a modulator that enables the modulator to transmit electro-optical signals at a consistent velocity, improving the modulation performance of the modulator.

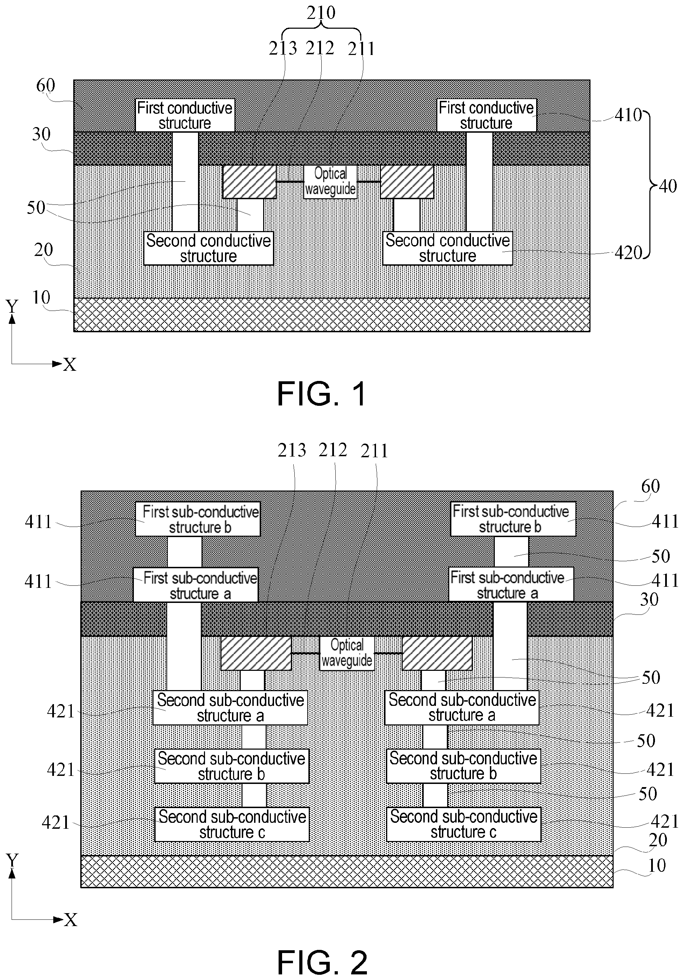

In an embodiment, as shown in FIG. 1, an optical modulator is provided, the optical modulator includes a first dielectric layer 10, a second dielectric layer 20, an insulating layer 30 and a signal transmission structure 40.

The second dielectric layer 20 is located on the first dielectric layer 10, a waveguide structure 210 is provided in the second dielectric layer 20, and the waveguide structure 210 may include an optical waveguide 211, a slab structure 212 and a contact structure 213. The optical waveguide 211 is electrically connected to the contact structure 213 through the slab structure 212, the optical waveguide 211 is provided for transmitting optical signals, and the slab structure 212 and the contact structure 213 may be provided for transmitting electrical signals.

The insulating layer 30 is located on the second dielectric layer 20. The signal transmission structure 40 may include a first conductive structure 410 and a second conductive structure 420. The signal transmission structure 40 is provided for transmitting electrical signals. The first conductive structure 410 is adjacent to the insulating layer 30. The first conductive structure 410 is electrically connected to the second conductive structure 420 through a via hole 50 penetrating the insulating layer 30. The first conductive structure 410 may serve as a traveling wave electrode and be connected to external electrical connections. Exemplarily, the optical modulator may further include a third dielectric layer 60, the third dielectric layer 60 is located on the insulating layer 30, and the first conductive structure 410 is disposed in the third dielectric layer. Optionally, the third dielectric layer 60 may be located on the same layer as the insulating layer 30. The second conductive structure 420 is located in the second dielectric layer 20. The second conductive structure 420 is electrically connected to the waveguide structure 210 through the via hole 50. Specifically, the second conductive structure is electrically connected to the contact structure 213 through the via hole 50. The via hole 50 may be a continuous panel structure, or may be a conductive support pillar structure with periodic gaps, or may be any other suitable structure, and no limitation is made herein on the structure, height, etc. of the via hole 50.

At least one of the first conductive structure 410 and the second conductive structure 420 has a target conductive structure. For example, the first conductive structure 410 has a target conductive structure, or the second conductive structure 420 has a target conductive structure, or both the first conductive structure 410 and the second conductive structure 420 have target conductive structures. In practical applications, whether the first conductive structure 410 and the second conductive structure 420 have target conductive structures may be set according to specific application scenarios, and no limitation is made herein.

The target conductive structure is a periodic structure. Moreover, a path distance of an electrical signal transmitted in an extension direction of the target conductive structure is greater than a path distance of an optical signal transmitted in an extension direction of the waveguide structure 210. The target conductive structure may be interpreted as a structure for extending the transmission path of the electrical signal in an extension direction of the conductive structure. The target conductive structure may be an overall periodic structure or a partial periodic structure, and the details may be referred to the following description.

Exemplarily, the first dielectric layer 10 may be a silicon layer or a glass material layer, and the glass material includes but is not limited to silicon oxide, boron oxide, etc. The first dielectric layer 10 is equivalent to supporting silicon and serves as a substrate. Exemplarily, the second dielectric layer 20 and the third dielectric layer 60 may be any one or more of any suitable dielectric layers such as a silicon nitride layer, a silicon dioxide layer, etc. Exemplarily, the second dielectric layer 20 and the third dielectric layer 60 may be fabricated by multi-layer deposition of silicon dioxide and silicon nitride. Exemplarily, the insulating layer 30 may be an oxide layer, such as a silicon dioxide layer. Exemplarily, the insulating layer 30 and the third dielectric layer 60 may be fabricated from the same material, for example, both the insulating layer 30 and the third dielectric layer 60 are silicon dioxide layers. Exemplarily, the waveguide structure 210 may be a silicon structure. The signal transmission structure 40 may be a metal structure, such as copper or aluminum. No limitation is made herein on the materials of each layer and each structure.

The above optical modulator includes the signal transmission structure 40 and the first dielectric layer 10, the second dielectric layer 20 and the insulating layer 30 that are stacked in sequence. The second dielectric layer 20 is provided with the waveguide structure 210, the signal transmission structure 40 includes the first conductive structure 410 and the second conductive structure 420. The first conductive structure 410 is located on the insulating layer 30, the second conductive structure 420 is located in the second dielectric layer 20, and the second conductive structure 420 is electrically connected to the waveguide structure 210 and the first conductive structure 410 respectively through the via holes 50. Since at least one of the first conductive structure 410 and the second conductive structure 420 has the target conductive structure with the periodic structure, and the path distance of the electrical signal transmitted in the extension direction of the target conductive structure is greater than the path distance of the optical signal transmitted in the extension direction of the waveguide structure 210, compared with the transmission path of the optical signal, the target conductive structure extends the transmission path of the electrical signal, which serves to slow down the transmission velocity of the electrical signal, enabling the velocity of the optical modulator transmitting the electrical signal to match the velocity of transmitting the optical signal, improving the velocity matching degree of the optical modulator transmitting electro-optical signals, thereby improving the modulation performance of the optical modulator on optical signals.

In practical applications, based on CMOS-SOI technology, the optical modulator provided by the above embodiments may be obtained by performing processes such as etching and deposition on an SOI wafer. The SOI wafer includes a substrate layer, the insulating layer 30 and a crystalline silicon layer that are stacked in sequence. First, the crystalline silicon layer is etched to form the waveguide structure 210 on the insulating layer 30, and the waveguide structure 210 includes the waveguide 211, the slab structure 212 and the contact structure 213. Then, through a doping process, the waveguide structure 210 is doped with carriers to form electrical connection with the upper metal. Then, a metal deposition process is performed to form the first conductive structure 410 electrically connected to the waveguide structure 210, and the second dielectric layer 20 is deposited on the insulating layer 30, with the first conductive structure 410 located in the second dielectric layer 20. Thus, the waveguide structure 210 and the first conductive structure 410 form a conventional optical modulator in related technology, and the conventional optical modulator includes the substrate layer, the insulating layer 30 and the second dielectric layer 20, wherein the second dielectric layer 20 is provided with the first conductive structure 410 electrically connected to the waveguide structure 210.

Based on the above processes, the present disclosure may form the first dielectric layer 10 on the second dielectric layer 20 by bonding, and remove the original substrate layer. After inverting the structure, the insulating layer 30 is etched to form the via holes 50, and a metal deposition process is performed to form the second conductive structure 420 on the insulating layer 30, and the third dielectric layer 60 is further deposited on the insulating layer 30, with the second conductive structure 420 located in the third dielectric layer 60. The second conductive structure 420 is electrically connected to the first conductive structure 410 through the via holes 50. Based on this, a new optical modulator with a "sandwich" structure is formed, wherein the "sandwich" structure refers to the waveguide structure 210 and the signal transmission structure 40, and the signal transmission structure 40 includes the first conductive structure 410 and the second conductive structure 420.

The above new optical modulator includes the first dielectric layer 10, the second dielectric layer 20, the insulating layer 30 and the third dielectric layer 60 that are stacked from bottom to top, as well as the waveguide structure 210 and the first conductive structure 410 disposed in the second dielectric layer 20, and the second conductive structure 420 disposed in the third dielectric layer 60. In the conventional optical modulator with a substrate layer, the silicon layer where the waveguide structure 210 is located is separated from the substrate layer by only a thickness of one insulating layer 30, and the thickness of the insulating layer 30 is generally within 3um. The substrate layer inherently has a specific resistivity (1-3000ohm-cm), which may be regarded as a conductor with low conductivity. Furthermore, since the waveguide structure 210 is silicon with doping, an electrical property thereof is close to that of a conductor, thus causing a parallel plate capacitor to be formed between the silicon layer where the waveguide structure 210 is located and the substrate layer. The parallel plate capacitor has a large parasitic capacitance, which will lead to a significant reduction in the bandwidth and impedance of the optical modulator, degrading the performance of the traveling wave electrode modulator. In this regard, the new optical modulation layer provided by the embodiments of the present disclosure removes the original substrate layer, so that the silicon layer where the waveguide structure 210 is located may no longer form the parallel plate with the substrate layer, that is, the parasitic capacitance between the waveguide structure 210 and the substrate is eliminated, avoiding the problem of reduced bandwidth and impedance of the optical modulator caused by the parasitic capacitance, thereby improving the modulation performance of the optical modulator.

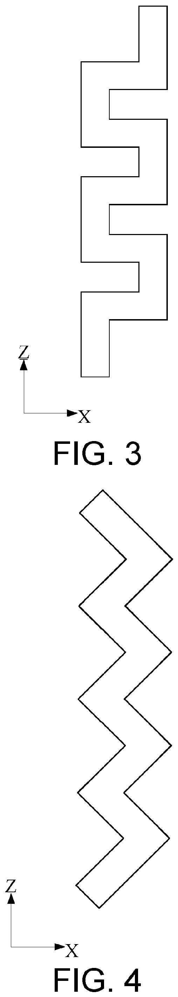

In an embodiment, as shown in FIG. 2, the signal transmission structure 40 may include a plurality of first conductive structures 410. One of the first conductive structures 410 is located on the insulating layer 30 and is electrically connected to the second conductive structure 420 through the via hole 50. Each of the first conductive structures 410 is stacked through the via hole 50 along a direction from the first dielectric layer 10 pointing to the insulating layer 30. In FIG. 4, taking the signal transmission structure 40 including two first conductive structures 410 as an example, the two first conductive structures 410 are a first conductive structure a and a second conductive structure b respectively, wherein the first conductive structure a is located on the insulating layer 30, the first conductive structure a is electrically connected to the first conductive structure b and the second conductive structure 420 respectively through the via holes 50, and the second conductive structure b is located on a side of the first conductive structure a away from the insulating layer 30.

Please continue to refer to FIG. 2, the signal transmission structure 40 may include a plurality of second conductive structures 420. One of the second conductive structures 420 is electrically connected to the first conductive structure 410 through the via hole 50, and each of the first conductive structures 410 is stacked through the via holes 50 along a direction from the insulating layer 30 pointing to the first dielectric layer 10. In FIG. 4, taking the signal transmission structure 40 including three of the second conductive structures 420 as an example, the three second conductive structures 420 are a second conductive structure a, a second conductive structure b and a second conductive structure c respectively, wherein the second conductive structure a is electrically connected to the waveguide structure 210 and the first conductive structure 410 respectively through the via holes 50, and the second conductive structure a, the second conductive structure b and the second conductive structure c are stacked through the via holes 50 respectively along the direction from the insulating layer 30 pointing to the first dielectric layer 10 (i.e., a negative Y-axis direction).

Optionally, a total number of the first conductive structures 410 and the second conductive structures 420 may be 6 layers, 7 layers, or 8 layers, which may be specifically set according to actual application requirements and process conditions, and is not limited herein.

Please continue to refer to FIG. 2, the first waveguide structure 410 may include two first sub-conductive structures 411, and the two first sub-conductive structures 411 are symmetrically disposed along the extension direction of the waveguide structure 210, located on both sides of the waveguide structure 210 respectively, and are electrically connected to the waveguide structure 210 through the via holes 50 respectively.

The second waveguide structure 420 may include two second sub-conductive structures 421, and the two second sub-conductive structures 421 are symmetrically disposed along the extension direction of the waveguide structure 210, located on both sides of the waveguide structure 210 respectively, and are electrically connected to the first sub-conductive structures 411 correspondingly through the via holes 50 respectively.

In the above optical modulator, the first waveguide structure 410 may include two first sub-conductive structures 411 symmetrically disposed, and the second waveguide structure 420 may include two second sub-conductive structures 421 symmetrically disposed, wherein any two sub-waveguide structures in the same layer may have periodic target conductive structures, which may better modulate the optical signal transmitted by the waveguide structure 210, and may also extend the transmission path of the electrical signal in the extension direction of the target conductive structure, enabling the velocity of the optical modulator transmitting the electrical signal to be consistent with the velocity of transmitting the optical signal, improving the velocity matching of the optical modulator transmitting electro-optical signals, thereby improving the modulation performance of the optical modulator for optical signals.

As shown in FIG. 3 and FIG. 4, the target conductive structure may be an overall periodic structure, and may be a sawtooth waveform structure or an S-shaped structure as well as other arbitrary suitable periodic structures. Taking the first conductive structure 410 having an S-shaped target conductive structure as an example, FIG. 3 shows a schematic structural diagram of the first conductive structure 410 taken along an XZ section. Since the first conductive structure 410 has two first sub-conductive structures 411, in the case that the first conductive structure 410 has an S-shaped target conductive structure, both of the two first sub-conductive structures 411 have the S-shaped target conductive structure as shown in FIG. 3.

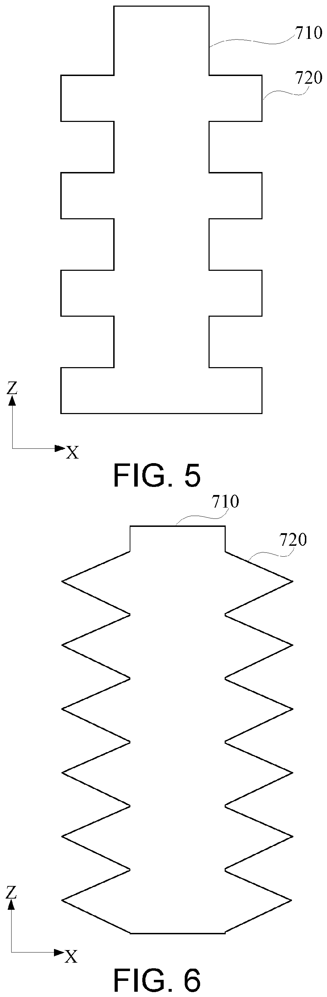

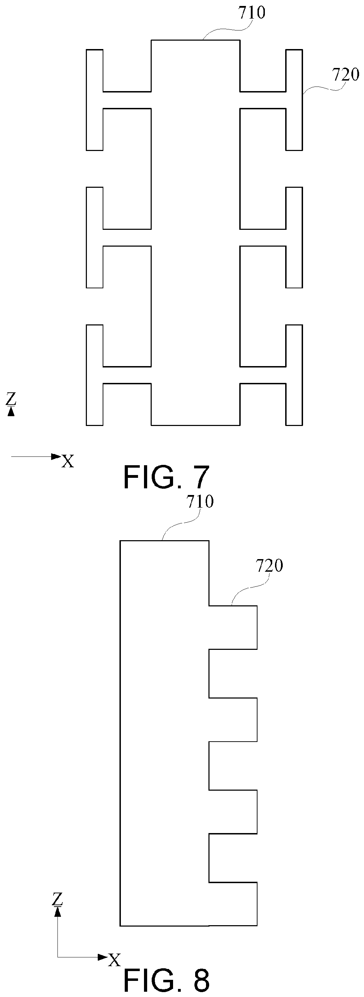

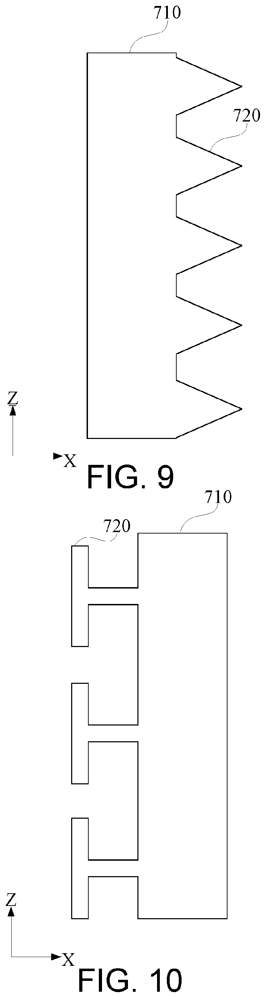

As shown in FIG. 5 to FIG. 10, the target conductive structure may include a main conductive structure 710 and a plurality of side conductive structures 720 periodically arranged along the extension direction of the waveguide structure 210. Each of the side conductive structures 720 is electrically connected to the main conductive structure 710. Each of the side conductive structures 720 may be disposed adjacently or disposed at intervals. Each of the side conductive structures 720 has the same shape, and a shape of the side conductive structure 720 may be any one of rectangular, triangular, and bent shapes. The bent shape may be an arbitrary bent pattern, such as a T-shape, an L-shape, etc. Exemplarily, as shown in FIG. 5 and FIG. 8, the shape of the side conductive structure 720 is rectangular, wherein each of the side conductive structures 720 is disposed at periodic intervals. As shown in FIG. 6 and FIG. 9, the shape of the side conductive structure 720 is triangular, and each of the side conductive structures 720 may be disposed at intervals or disposed adjacently. As shown in FIG. 7 and FIG. 10, the shape of the side conductive structure 720 is T-shaped, and each of the side conductive structures 720 is disposed at intervals.

It should be noted that each of the side conductive structures 720 shown in FIG. 5 to FIG. 7 is symmetrically disposed on both sides of the main conductive structure 710, forming an overall periodic target conductive structure. Each of the side conductive structures 720 shown in FIG. 8 to FIG. 10 is disposed on the same side in the electrical signal transmission direction of the main conductive structure 710, forming a partial periodic target conductive structure. Each of the side conductive structures 720 may be located on a left side of the main conductive structure 710 as shown in FIG. 10, or may be located on a right side of the main conductive structure 710 as shown in FIG. 8 and FIG. 9, which is not limited herein. Based on this conductive structure 60, the electro-optical mismatch problem caused by inconsistent group refractive indices of the modulator is solved, and the modulation performance of the modulator is improved.

In the above optical modulator, each of the side conductive structures 720 is arranged in an overall periodic arrangement or a partial periodic arrangement on the main conductive structure 710, which may extend the transmission path distance of the electrical signal in the extension direction of the target conductive structure, serving the function of slowing down the transmission velocity of the electrical signal, enabling the velocity of the modulator transmitting the electrical signal to be consistent with the velocity of transmitting the optical signal, improving the matching degree of the modulator transmitting the electro-optical signal, thereby solving the problem of electro-optical mismatch of the modulator, and improving the performance of the modulator modulating the optical signal.

As can be seen from the embodiments shown in FIG. 1 and FIG. 2 above, the first conductive structure 410 and the second conductive structure 420 may respectively include two symmetrically disposed sub-conductive structures, that is, the first conductive structure 410 may include two symmetrically disposed first sub-conductive structures 411, and the second conductive structure 420 may include two symmetrically disposed second sub-conductive structures 421. Any two sub-conductive structures disposed in the same layer may respectively have the target conductive structure. For example, the two first sub-conductive structures 411 have the target conductive structure, or the two second sub-conductive structures 421 have the target conductive structure, or the two first sub-conductive structures 411 and the two second sub-conductive structures 421 have the target conductive structure.

In the case that each of the side conductive structures 720 is disposed on the same side of the main conductive structure 710 in the extension direction of the conductive structure, the side conductive structures 720 in the two sub-conductive structures of the same layer may be disposed facing each other or disposed back to back. The shapes of the side conductive structures 720 of the two sub-conductive structures disposed in the same layer may be the same or different, as long as the velocity of the optical modulator transmitting the electro-optical signal is matched.

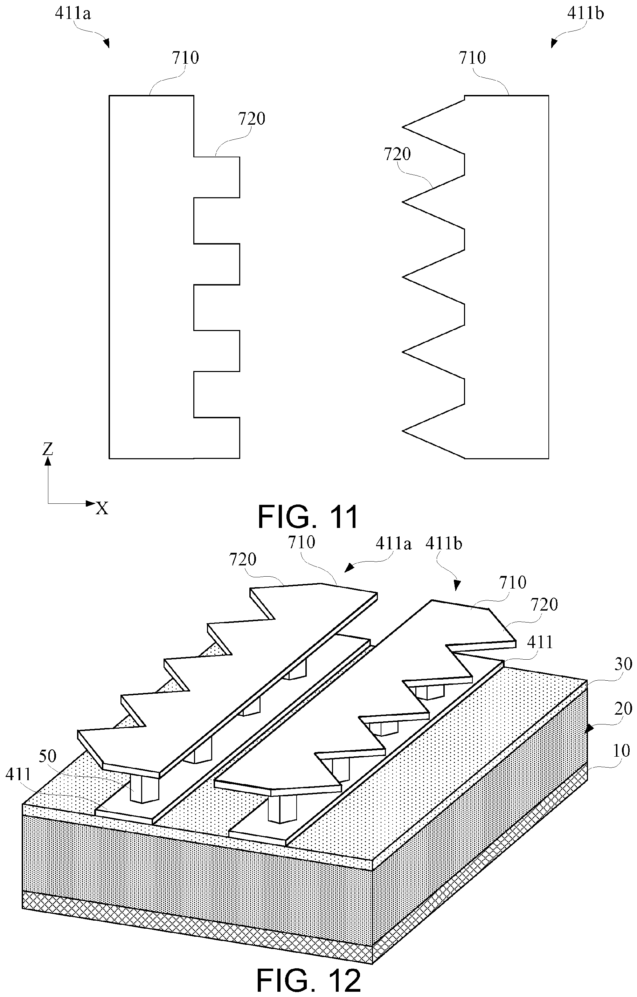

Exemplarily, when the two first sub-conductive structures 411 have periodic target conductive structures, the side conductive structures 720 in the two first sub-conductive structures 411 may be disposed facing each other or disposed back to back. As shown in FIG. 11, the side conductive structures 720 of the two first sub-conductive structures 411 (first sub-conductive structure 411a and first sub-conductive structure 411b) are disposed facing each other. The side conductive structure 720 of the first sub-conductive structure 411a is disposed on the right side of the main conductive structure 710 in the extension direction of the conductive structure, and the shape of the side conductive structure 720 of the first sub-conductive structure 411a is rectangular. The side conductive structure 720 of the first sub-conductive structure 411b is disposed on the left side of the main conductive structure 710 in the extension direction of the conductive structure, and the shape of the side conductive structure 720 of the first sub-conductive structure 411b is triangular. As shown in FIG. 12, the side conductive structures 720 of the two first sub-conductive structures 411 (first sub-conductive structure 411a and first sub-conductive structure 411b) are disposed back to back. The side conductive structure 720 of the first sub-conductive structure 411a is disposed on the left side of the main conductive structure 710 in the extension direction of the conductive structure, and the shape of the side conductive structure 720 of the first sub-conductive structure 411a is triangular, the side conductive structure 720 of the first sub-conductive structure 411b is disposed on the right side of the main conductive structure 710 in the extension direction of the conductive structure, and the shape of the side conductive structure 720 of the first sub-conductive structure 411b is triangular.

The technical features of the above-described embodiments may be combined in any arbitrary manner. For the sake of concise description, not all possible combinations of the various technical features in the above embodiments are described. However, as long as there is no contradiction in the combinations of these technical features, they should all be considered as within the scope recorded in this specification.

The above-described embodiments merely express several implementation modes of the utility model, and the descriptions thereof are relatively specific and detailed, but should not be understood as limiting the scope of the utility model patent. It should be noted that, for those of ordinary skill in the art, several variations and improvements may be made without departing from the concept of the utility model, and these all fall within the protection scope of the utility model. Therefore, the protection scope of the utility model patent shall be subject to the appended claims.

## Claims

1. An optical modulator, **characterized in that**, comprising:
a first dielectric layer;
a second dielectric layer, located on the first dielectric layer, the second dielectric layer being provided with a waveguide structure;
an insulating layer, located on the second dielectric layer;
a signal transmission structure, comprising a first conductive structure and a second conductive structure, wherein the first conductive structure is located on the insulating layer, the second conductive structure is located in the second dielectric layer, the second conductive structure is electrically connected to the waveguide structure and the first conductive structure respectively through via holes; wherein,
at least one of the first conductive structure and the second conductive structure has a target conductive structure, the target conductive structure is a periodic structure, and a path distance of an electrical signal transmitting in an extension direction of the target conductive structure is greater than a path distance of an optical signal transmitting in an extension direction of the waveguide structure.

2. The optical modulator according to claim 1, **characterized in that**, the signal transmission structure comprises a plurality of the first conductive structures, wherein one of the first conductive structures is adjacent to the insulating layer, and is electrically connected to the second conductive structure through a via hole penetrating the insulating layer, and each of the first conductive structures is stacked along a direction from the first dielectric layer pointing to the insulating layer.

3. The optical modulator according to claim 1, **characterized in that**, the signal transmission structure comprises a plurality of the second conductive structures, wherein one end of one of the second conductive structures is electrically connected to the first conductive structure through a via hole, and the other end is electrically connected to the waveguide structure through a via hole, and each of the first conductive structures is stacked along a direction from the insulating layer pointing to the first dielectric layer.

4. The optical modulator according to claim 1, **characterized in that**, the signal transmission structure comprises a plurality of the first conductive structures and a plurality of the second conductive structures, and a total number of the first conductive structures and the second conductive structures ranges from 6 to 8 layers.

5. The optical modulator according to claim 1, **characterized in that**, the optical modulator further comprises a third dielectric layer, the third dielectric layer is located on the insulating layer, and the second conductive structure is disposed in the third dielectric layer.

6. The optical modulator according to claim 5, **characterized in that**, the insulating layer and the third dielectric layer are fabricated from a same material.

7. The optical modulator according to claim 1, **characterized in that**, the first dielectric layer is a silicon layer or a glass material layer.

8. The optical modulator according to claim 1, **characterized in that**, the first dielectric layer is formed on the second dielectric layer through bonding.

9. The optical modulator according to claim 1, **characterized in that**, the first conductive structure comprises two first sub-conductive structures, the two first sub-conductive structures have the target conductive structure, and the two first sub-conductive structures are disposed facing each other or back to back.

10. The optical modulator according to claim 1, **characterized in that**, the second conductive structure comprises two second sub-conductive structures, each of the second sub-conductive structures has the target conductive structure, and the two second sub-conductive structures are disposed facing each other or back to back.

11. The optical modulator according to claim 1, **characterized in that**, the target conductive structure comprises a main conductive structure and a plurality of side conductive structures periodically arranged along the extension direction of the waveguide structure, wherein, each of the side conductive structures is electrically connected to the main conductive structure.
